# EUROPÄISCHE PATENTANMELDUNG

(11) **EP 0 969 646 A1**
(43) Veröffentlichungstag der Anmeldung: **05.01.2000**
(21) Anmeldenummer: 99440151.1
(22) Anmeldetag: 18.06.1999
(51) Int. Cl.: H04M 3/42

(54) **Simultane Rufzustellung an mehren TK-Netzzugängen**

(30) Priorität: 01.07.1998 DE 19829342
(71) Anmelder: ALCATEL, 75008 Paris (FR)
(72) Erfinder: Krank, Lothar, 71254 Ditzingen (DE); Stahl, Uwe, 71229 Leonberg (DE); Lautenschlager, Wolfgang, 71287 Weissach-Flacht (DE); Weik, Hartmut, 70195 Stuttgart (DE)
(74) Vertreter: Zinsinger, Norbert

(57) **Zusammenfassung**

Ein Verfahren zur Rufzustellung an einen gerufenen Teilnehmer (B) in einem oder mehreren Telekommunikations(=TK)- Netzen (1, 2, 3) ist dadurch gekennzeichnet, daß der gerufene TK-Teilnehmer (B) über mehrere unterschiedliche Netzzugänge (11, 12, 13) verfügt, die mit derselben Rufnummer von einem rufenden TK-Teilnehmer (A) aus erreichbar sind, und daß ein Ruf bei Anwahl dieser einheitlichen Rufnummer durch den rufenden TK-Teilnehmer (A) parallel zu mehreren Netzzugängen (11, 12, 13) des gerufenen TK-Teilnehmers (B) weitergeleitet wird. Bei Annahme des Rufes durch den gerufenen TK-Teilnehmer (B) an einem seiner Netzzugänge (13) wird durch eine entsprechende Rückmeldung der simultan anstehende Ruf an seinen anderen Netzzugängen (11, 12) ausgelöst. Damit kann ein eingehender Ruf gleichzeitig an mehreren verschiedenen TK-Netzzugängen des gerufenen TK-Teilnehmers angeboten werden, so daß keine größere Zeitverzögerung durch ein sukzessives Abarbeiten der Routingliste auftritt.

## Beschreibung

Die Erfindung betrifft ein Verfahren zur Rufzustellung an einen gerufenen Teilnehmer in einem oder mehreren Telekommunikations (=TK) - Netzen.

Ein solches Verfahren ist beispielsweise bekannt aus der US 5,592,541.

TK-Teilnehmer sind heutzutage aufgrund der allgemein erhöhten Mobilität oftmals nicht mehr überwiegend oder ständig an einem einzigen TK-Endgerät erreichbar. So schlägt z.B. die DE 44 40 500 A1 ein Kommunikationssystem vor, bei dem nach dem Entfernen eines schnurlosen Endgerätes aus einer zugehörigen Aufnahmevorrichtung eine automatische Aktivierung einer Rufumleitung von einem schnurgebundenen zu einem schnurlosen Endgerät vorgesehen ist. Insbesondere im Zusammenhang mit Mobilfunksystemen ist in der DE 38 43 870 A1 ein Verfahren zur Rufübermittlung an eine mobile Funkstation vorgesehen, bei dem eine Anrufumleitung von einer ersten mobilen Funkstation, die zum Zeitpunkt des Anrufens unbesetzt ist oder keinen Anruf entgegennehmen will, zu einer anderen, beliebigen mobilen Funkstation stattfindet, wenn die mobile Funkstation oder ein TK-Teilnehmer an die Funküberleiteinrichtung die eigene Rufnummer und die Umleitungsrufnummer der anderen mobilen Funkstation übermittelt hat.

Neue Techniken machen es zudem möglich, Endgeräte z.B. mittels einer Chipkarte "für sich in Besitz zu nehmen" und für diese Zeit wie einen eigenen Anschluß zu nutzen. Dies kann dazu führen, daß ein TK-Teilnehmer zu einem Zeitpunkt mehrere Zugänge zu verschiedenen Netzen besitzt. In der DE 37 32 109 A1 wird beispielsweise ein Telefonvermittlungssystem vorgeschlagen, bei dem der aktuelle Aufenthaltsort eines TK-Teilnehmers mittels einer Codekarte festgestellt und ein Ruf für diesen TK-Teilnehmer an ein Endgerät in seiner Nähe weitergeleitet wird.

Häufig besitzen heute TK-Teilnehmer aber auch neben einem Anschluß zu einem oder mehreren Festnetzen auch einen Anschluß an ein Mobilnetz. Verfahren zur Rufumleitung zwischen Festnetz und Mobilnetz sind beispielsweise in der EP 0 683 589 A2 oder in der DE 41 40 974 A1 beschrieben. Selbst bei TK-Netzen der gleichen Art (Festnetz bzw. Mobilnetz) können sich die Netze verschiedener Betreiber von der Technologie her unterscheiden, so daß bei einem Zugang des gleichen Teilnehmers zu unterschiedlichen Netzen bei einer Rufweiterleitung Probleme auftreten können.

In der DE 44 30 343 A1 ist ein Verfahren zum Anrufen eines Telefonteilnehmers beschrieben, bei dem für eine Telefonleitung eine Freiwahlgruppe aus Telefonleitungen definiert und bei Empfang eines für die Telefonleitung bestimmten Anrufes eine Leitung der Freiwahlgruppe angerufen und eine bestimmte Antwortzeit abgewartet wird. Falls das betroffene Telefon in dieser Zeit nicht abgenommen wird, soll der Ruf an eine andere Telefonleitung der Freiwahlgruppe weitergegeben werden, so lange, bis der angerufene TK-Teilnehmer an einer der Leitungen das Gespräch annimmt. Es erfolgt also eine automatische Rufumleitung nach einer vorher festgelegten Reihenfolge von anzuwählenden Leitungen einer Freiwahlgruppe.

Aus der eingangs zitierten US 5,592,541 schließlich ist ein Verfahren bekannt, bei dem nach einer vom anzurufenden TK-Teilnehmer vorher festgelegten Liste für seine Telefonnummer eingehende Rufe sukzessive an von ihm gewünschte andere Telefonnummern weitergeleitet werden, und zwar so lange, bis der angerufene TK-Teilnehmer an einem der zu den Rufnummern der Liste gehörenden TK-Endgeräte den Ruf annimmt oder der anrufende Teilnehmer den Ruf unterbricht. Dabei kann die Routingliste für die sukzessive Rufzustellung auch für unterschieliche Zeiten unterschiedlich gestaltet werden.

Allen oben beschriebenen bekannten Verfahren ist jedoch gemein, daß ein gerufener TK-Teilnehmer, der mehrere Zugänge zu einem oder mehreren TK-Netzen besitzt, nicht simultan an jedem seiner Netzzugänge erreicht werden kann. Bestenfalls wird ein ankommender Ruf nacheinander an verschiedene Netzzugänge weitergeleitet, was jedoch zu erheblichen Zeitverzögerungen führen kann, insbesondere wenn der gerufene TKTeilnehmer gerade am letzten Anschluß der Routingliste erreichbar wäre, so daß der anrufende TK-Teilnehmer möglicherweise bereits vor Erreichen des gerufenen TK-Teilnehmers sein Vorhaben aufgibt und den Ruf unterbricht.

Aufgabe der vorliegenden Erfindung ist es demgegenüber, ein Verfahren zur Rufzustellung vorzustellen, bei dem ein eingehender Ruf gleichzeitig an mehreren verschiedenen TK-Netzzugängen des gerufenen TK-Teilnehmers angeboten wird, so daß keine größere Zeitverzögerung durch ein sukzessives Abarbeiten der Routingliste auftritt.

Erfindungsgemäß wird diese Aufgabe auf ebenso überraschend einfache wie wirkungsvolle Art und Weise dadurch gelöst, daß der gerufene TK-Teilnehmer über mehrere unterschiedliche Netzzugänge verfügt, die mit derselben Rufnummer von einem rufenden TK-Teilnehmer aus erreichbar sind, und daß ein Ruf bei Anwahl dieser einheitlichen Rufnummer durch den rufenden TK-Teilnehmer parallel zu mehreren Netzzugängen des gerufenen TK-Teilnehmers weitergeleitet wird.

Dadurch wird die Erreichbarkeit des gerufenen TK-Teilnehmers wesentlich verbessert, da er an seinen sämtlichen Netzzugangsstellen zu jedem Zeitpunkt aufgrund der simultanen Rufzustellung erreichbar ist. Gegenüber eine sukzessiven Abarbeitung einer vorgegebenen Routingliste kommt der Ruf sehr viel schneller zum gerufenen Zielteilnehmer.

Bei einer besonders bevorzugten Variante des erfindungsgemäßen Verfahrens wird bei Annahme des Rufes durch den gerufenen TK-Teilnehmer an einem seiner Netzzugänge durch eine entsprechende Rückmeldung der simultan anstehende Ruf an seinen anderen Netzzugängen ausgelöst. Dadurch werden die Leitungen zu den verbliebenen Netzzugängen wieder frei.

Bei einer weiteren bevorzugten Verfahrensvariante ist vorgesehen, daß der gerufene TK-Teilnehmer aus seinen sämtlichen Netzzugängen eine Gruppe auswählen kann, bei der die parallele Rufzustellung nach Anwahl einer einheitlichen Rufnummer durch einen rufenden TK-Teilnehmer erfolgen soll. So kann der Zielteilnehmer seine Erreichbarkeit über eine bestimmte einheitliche Rufnummer an seinen sämtlichen Netzzugängen nach von ihm selbst aufgestellten Kriterien auf eine ausgewählte Gruppe einschränken. Diese Gruppe könnte auch für verschiedene Zeiten, beispielsweise tagsüber und nachts oder an Werktagen und Feiertagen unterschiedlich gewählt werden.

Besonders vorteilhaft läßt sich das erfindungsgemäße Verfahren einsetzen, wenn der gerufene TK-Teilnehmer ein Diensteanbieter ist und abhängig vom angebotenen Dienst automatisch eine bestimmte Gruppe aus sämtlichen Netzzugängen des gerufenen TK-Teilnehmers für eine parallele Rufzustellung ausgewählt wird, die den entsprechenden Dienst tatsächlich unterstützt.

Vorteilhafterweise kann die parallele Rufzustellung nach dem erfindungsgemäßen Verfahren Dienstmerkmal eines IN(= Intelligent Network)-Dienstes sein, das entweder von einem Netzbetreiber oder einem im Netz tätigen Diensteanbieter den Netz teilnehmern angeboten wird.

Bei einer vorteilhaften Weiterbildung dieser Verfahrensvariante wird das Dienstmerkmal "parallele Rufzustellung" bei Anwahl der gewöhnlichen Rufnummer des gerufenen TK-Teilnehmers aktiviert. So brauchen sich die anrufenden TK-Teilnehmer für den Aufbau einer Verbindung mit dem gerufenen Zielteilnehmer lediglich dessen normale Rufnummer zu merken oder diese über einen Auskunftdienst oder das Telefonbuch abzufragen.

Alternativ kann das Dienstmerkmal "parallele Rufzustellung" bei Anwahl einer zusätzlichen Dienstekennzahl bestehenden zusammengesetzten Rufnummer aktiviert werden sowie aus der gewöhnlichen Rufnummer des gerufenen TK-Teilnehmers. Dadurch kann auch der rufende Teilnehmer selbst zwischen der Option "Rufzustellung an einen bestimmten Netzzugang" und "parallele Rufzustellung" auswählen. Für das Dienstmerkmal "parallele Rufzustellung" könnten dann eventuell zusätzliche Gebühren beim rufenden Teilnehmer anfallen.

Besonders vorteilhaft ist das erfindungsgemäße Verfahren, wenn die TK-Netze, zu denen der gerufene TK-Teilnehmer Zugang hat, technisch unterschiedliche TK-Netze, insbesondere Festnetze und Mobilnetze, umfassen. Dadurch wird die Erreichbarkeit des gerufenen Zielteilnehmers auch über unterschiedliche TK-Netze und verschiedene Netztechnologien hinweg wesentlich verbessert.

Vorteilhafterweise wird das erfindungsgemäße Verfahren so aufgebaut sein, daß ein Ruf eines rufenden TK-Teilnehmers an den gerufenen TK-Teilnehmer zunächst über eine erste "Setup-Message" bis zu einem Punkt im TK-Netz, vorzugsweise einer Vermittlungsstelle, aufgebaut wird, an dem die für die Parallelverzweigung des Rufes zu den verschiedenen Netzzugängen des gerufenen TK-Teilnehmers erforderliche Information vorliegt oder abgerufen werden kann, und daß der Ruf von da aus - auch über TK-Netze verschiedener Betreiber und unterschiedliche Netztechnologien hinweg - zu den Netzzugängen des gerufenen TK-Teilnehmers über eine weitere "Setup-Message" parallel weitergeleitet wird.

Bei einer weiteren bevorzugten Verfahrensvariante schließlich kann der Rufaufbau nach dem "Call-Drop-Back"-Verfahren erfolgen und insbesondere ein Parallelruf auch an eine schon passierte Vermittlungsstelle zurückgegeben werden, um den Rufaufbau-Baum zu optimieren.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. Es zeigen:
- Fig. 1: die schematische Darstellung einer beispielhaften Netzkonfiguration zur Anwendung des erfindungsgemäßen Verfahrens;
- Fig. 2a: eine mögliche Variante des erfindungsgemäßen Verbindungsaufbaus in einer Netzkonfiguration nach Fig. 1; und
- Fig. 2b: die Auslösung der an den übrigen Netzzugängen anstehenden Rufe bei Annahme des Rufes an einem Netzzugang nach paralleler Rufzustellung gemäß Fig. 2a.

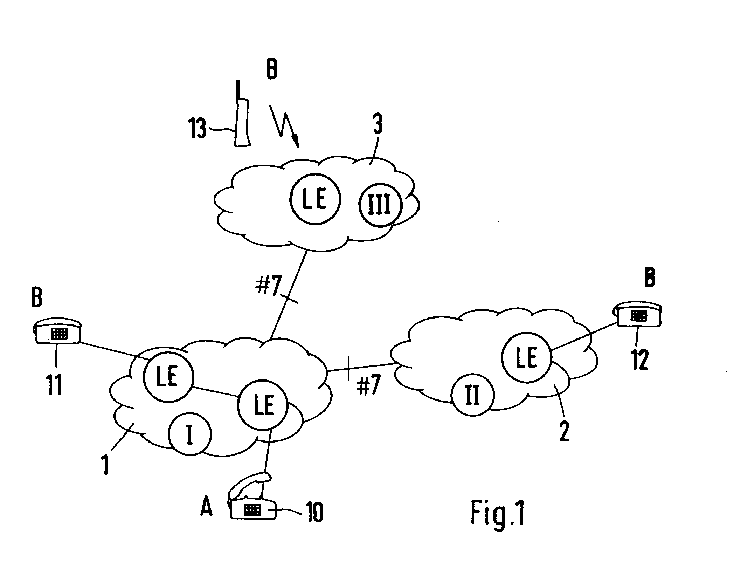

In Fig. 1 ist eine Beispielkonfiguration dargestellt, bei der ein gerufener Teilnehmer B jeweils einen Netzzugang zu einem Festnetz 1 eines Betreibers I durch ein Endgerät 11, zu einem Festnetz 2 eines Betreibers II durch ein Endgerät 12 und an ein Mobilnetz 3 eines Betreibers III mittels eines Mobiltelefons 13 besitzt. Das Festnetz 1 steht mit dem Festnetz 2 und mit dem Mobilnetz 3 jeweils über ein Zeichengabenetz, beispielsweise über eine #7-Leitung, in Verbindung. Ein anderer TK-Teilnehmer A, der im gezeigten Beispiel einen Zugang zum Festnetz 1 besitzt, versucht, über sein TK-Endgerät 10 eine Kommunikationsbeziehung zum TKTeilnehmer B aufzubauen.

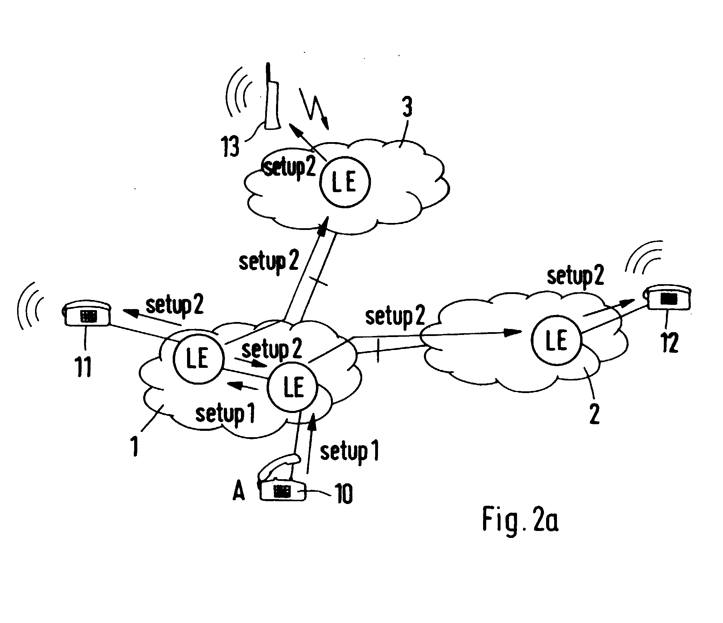

Der weitere Ablauf des Verbindungsaufbaus gemäß dem erfindungsgemäßen Verfahren zur parallelen Rufumstellung ist in Fig. 2a dargestellt. Dabei kann das Dienstmerkmal "parallele Rufzustellung" entweder für den gerufenen TK-Teilnehmer B fest eingestellt sein, wobei dann in der Regel seine "gewöhnliche" Rufnummer verwendet werden sollte, oder er kann über eine Dienstekennzahl vom rufenden TK-Teilnehmer A explizit angewählt werden.

Der Ruf wird über eine erste "Setup-Message" setup 1 bis zu einem Punkt im Festnetz 1 aufgebaut, an dem die für die Verzweigung des Rufes zu den verschiedenen Netzzugängen des gerufenen TK-Teilnehmers B notwendige Information vorliegt oder zumindest abgerufen werden kann. Dies wird in der Regel eine Vermittlungsstelle LE oder ein anderer Netzknotenpunkt sein. Von da wird der Ruf, auch über Netze verschiedener anderer Betreiber und unterschiedlicher Technologien hinweg mittels einer weiteren Setup-Message setup 2 zu den diversen Netzzugängen des gerufenen TK-Teilnehmers B weitergeleitet.

Der TK-Teilnehmer B kann aber auch die parallele Rufzustellung nur auf eine bestimmte Gruppe seiner Netzzugänge beschränken. Insbesondere für den Fall, daß der gerufene TKTeilnehmer B ein Diensteanbieter ist, könnte er die parallele Rufzustellung nur zu denjenigen Endgeräten erfolgen lassen, die denjenigen Dienst auch wirklich unterstützen, welcher durch die Rufnummer angefordert werden soll, die vom rufenden TK-Teilnehmer A angewählt wird. Diese Entscheidung kann entweder automatisch bereits entweder im Netz erfolgen oder aber auch im Endgerät des gerufenen TK-Teilnehmers B selbst getroffen werden.

Die erfindungsgemäße parallele Rufzustellung kann insbesondere Dienstmerkmal eines IN(= Intelligent Network)-Dienstes sein und durch Setzen entsprechender Diensteparameter die oben beschriebenen Optionen umfassen.

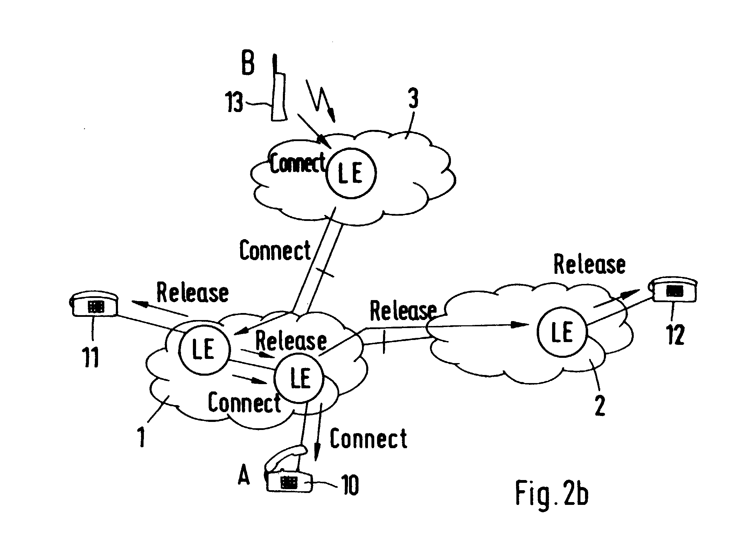

Hat der gerufene TK-Teilnehmer B den Ruf an einem der bestehenden bzw. ausgewählten Netzzugänge angenommen, wird dies, wie in Fig. 2b dargestellt, über die entsprechende Message "Connect" an die initiierende Einheit, welche die "parallele Rufzustellung" einleitete, zurückgemeldet. Im gezeigten Beispiel war dies eine Vermittlungsstelle LE im Festnetz 1.

Von dort aus werden nun die parallel anstehenden Rufe zu den anderen Netzzugängen, an denen sich der gerufene TK-Teilnehmer B gerade nicht befindet, im gezeigten Beispiel zu den Endgeräten 11 und 12, mittels einer Release-Message ausgelöst.

Zur Optimierung des Rufaufbau-Baumes kann mit Hilfe des Call-Drop-Back-Verfahrens ein Ruf an einen anzusprechenden Netzzugang auch an Vermittlungsstellen LE zurückgegeben werden, die schon beim Rufaufbau erstmalig passiert wurden.

## Patentansprüche

1. Verfahren zur Rufzustellung an einen gerufenen Teilnehmer (B) in einem oder mehreren Telekommunikations(=TK)Netzen (1, 2, 3),
dadurch gekennzeichnet,
daß der gerufene TK-Teilnehmer (B) über mehrere unterschiedliche Netzzugänge (11, 12, 13) verfügt, die mit derselben Rufnummer von einem rufenden TK-Teilnehmer (A) aus erreichbar sind, und daß ein Ruf bei Anwahl dieser einheitlichen Rufnummer durch den rufenden TKTeilnehmer (A) parallel zu mehreren Netzzugängen (11, 12, 13) des gerufenen TK-Teilnehmers (B) weitergeleitet wird.

2. Verfahren nach Anspruch 1, dadurch gekennzeichnet, daß bei Annahme des Rufes durch den gerufenen TK-Teilnehmer (B) an einem seiner Netzzugänge (13) durch eine entsprechende Rückmeldung der simultan anstehende Ruf an seinen anderen Netzzugängen (11, 12) ausgelöst wird.

3. Verfahren nach einem der vorhergehenden Ansprüche, dadurch gekennzeichnet, daß der gerufene TK-Teilnehmer (B) aus seinen sämtlichen Netzzugängen (11, 12, 13) eine Gruppe auswählen kann, bei der die parallele Rufzustellung nach Anwahl einer einheitlichen Rufnummer durch einen rufenden TK-Teilnehmer (A) erfolgen soll.

4. Verfahren nach einem der vorhergehenden Ansprüche, dadurch gekennzeichnet, daß der gerufene TK-Teilnehmer (B) ein Diensteanbieter ist, und daß abhängig vom angebotenen Dienst automatisch eine bestimmte Gruppe aus sämtlichen Netzzugängen (11, 12, 13) des gerufenen TKTeilnehmers (B) für eine parallele Rufzustellung ausgewählt wird, die den entsprechenden Dienst unterstützt.

5. Verfahren nach einem der vorhergehenden Ansprüche, dadurch gekennzeichnet, daß die parallele Rufzustellung Dienstmerkmal eines IN(= Intelligent Network)-Dienstes ist.

6. Verfahren nach Anspruch 5, dadurch gekennzeichnet, daß das Dienstmerkmal "parallele Rufzustellung" bei Anwahl der gewöhnlichen Rufnummer des gerufenen TK-Teilnehmers (B) aktiviert wird.

7. Verfahren nach Anspruch 5, dadurch gekennzeichnet, daß das Dienstmerkmal "parallele Rufzustellung" bei Anwahl einer aus der gewöhnlichen Rufnummer des gerufenen TKTeilnehmers (B) sowie einer zusätzliche Dienstekennzahl bestehenden zusammengesetzten Rufnummer aktiviert wird.

8. Verfahren nach einem der vorhergehenden Ansprüche, dadurch gekennzeichnet, daß die TK-Netze (1, 2, 3), zu denen der gerufene TK-Teilnehmer (B) Zugang hat, technisch unterschiedliche TK-Netze, insbesondere Festnetze (1, 2) und Mobilnetze (3), umfassen.

9. Verfahren nach einem der vorhergehenden Ansprüche, dadurch gekennzeichnet, daß ein Ruf eines rufenden TKTeilnehmers (A) an den rufenden TK-Teilnehmer (B) zunächst über eine erste "Setup-Message" (setup 1) bis zu einem Punkt im TK-Netz (1), vorzugsweise eine Vermittlungsstelle (LE), aufgebaut wird, an dem die für die Parallelverzweigung des Rufes zu den verschiedenen Netzzugängen (11, 12, 13) des gerufenen TK-Teilnehmers (B) erforderliche Information vorliegt oder abgerufen werden kann, und daß der Ruf von da aus- auch über TKNetze (2, 3) verschiedener Betreiber und unterschiedliche Netztechnologien hinweg - zu den Netzzugängen (11, 12, 13) des gerufenen TK-Teilnehmers (B) über eine weitere "Setup-Message" (setup 2) parallel weitergeleitet wird.

10. Verfahren nach einem der vorhergehenden Ansprüche, dadurch gekennzeichnet, daß der Rufaufbau nach dem "CallDrop-Back"-Verfahren erfolgt und insbesondere ein Parallelruf auch an eine schon passierte Vermittlungsstelle (LE) zurückgegeben werden kann.
